# EUROPEAN PATENT SPECIFICATION

(11) **EP 2 340 279 B1**
(45) Date of publication and mention of the grant of the patent: **06.03.2013**
(21) Application number: 09783230.7
(22) Date of filing: 21.09.2009
(51) Int. Cl.: C08L 23/08, C08L 23/10, C08L 23/22, C08J 5/18

(54) **POLYOLEFIN COMPOSITIONS HAVING GOOD RESISTANCE AT WHITENING**
POLYOLEFINZUSAMMENSETZUNGEN MIT GUTER TRÜBUNGSBESTÄNDIGKEIT
COMPOSITIONS POLYOLÉFINIQUES POSSÉDANT UNE BONNE RÉSISTANCE AU BLANCHIMENT

(30) Priority: 24.09.2008 EP 08164952; 03.10.2008 US 195116 P
(43) Date of publication of application: 06.07.2011
(73) Proprietor: Basell Poliolefine Italia S.r.l., 20127 Milano (IT)
(72) Inventor: DE PALO, Roberto, I-44100 Ferrara (IT); MASSARI, Paola, I-44100 Ferrara (IT); CIARAFONI, Marco, I-44100 Ferrara (IT)
(74) Representative: Gaverini, Gaetano Luigi Attilio
(86) International application number: PCT/EP2009/062184
(87) International publication number: WO 2010/034684

(56) References cited:
- EP-A2- 0 490 353
- WO-A1-98/54251
- WO-A1-2004/048424
- WO-A1-2006/042815
- WO-A1-2006/067043
- WO-A1-2009/068371
- US-A- 4 078 020
- US-A- 4 966 944
- US-A- 5 552 482
- US-A1- 2005 080 192

## Description

The present invention relates to polyolefin compositions having excellent whitening resistance characteristics and impact resistance.

The polyolefin compositions according to the present invention find application in a variety of fields such as the automotive field, in particular as bumpers and interior trims, luggage and house ware and packaging.

As is known, the isotactic polypropylene, though being endowed with an exceptional combination of excellent properties, is affected by the drawback of possessing an insufficient impact resistance at relatively low temperatures.

According to the teaching of the prior art, it is possible to obviate the said drawback and maintain whitening resistance, without sensibly affecting the other polymer properties, by properly adding rubbers and polyethylene to the polypropylene.

The European patent application EP-A-0 086 300 relates to so called "impact polypropylene compositions" and discloses polypropylene block copolymers having improved impact resistance and high stiffness.

In the US patent 4 966 944 (Quantum) impact polymeric blends are disclosed having improved resistance to stress whitening (bruising). In this patent intimate mixtures of polypropylene homopolymer and random copolymers of propylene with ethylene are blended with crystalline thermoplastic homo or copolymers of butene-1.

In the European patent EP-B-0 730 003 (Tosoh) propylene homopolymers or random or block copolymers of propylene with ethylene are blended with ethylene/alfa olefin copolymer elastomers, The blends exhibit resistance to whitening on impact.

In the US patent 4 734 459 a polypropylene composition having good whitening resistance is disclosed. According to the teaching of the said prior art document, it is possible to improve whitening resistance by replacing the ethylene-propylene copolymer rubber with an ethylene-butene-1 copolymer rubber,

In the European patent application EP-A-1 236 769 (Borealis) an heterophasic propylene composition is disclosed with improved balance of impact stiffness and stress whitening resistance comprising a crystalline propylene polymer matrix (i) an elastomeric component (ii) and an ethylene copolymer plastomer.(iii). The elastomeric component (ii) is a propylene/ethylene copolymer (C3/C2) and the ethylene copolymer plastomer (iii) is a metallocene catalyst derived plastomer (Exact), in the examples.

The international patent application WO2006/067023 A1 discloses polyolefin compositions obtained by sequential polymerization having:
a) 50-77% of a crystalline propylene polymer having high isotacticity;
b) 13-28% of an elastomeric copolymer of ethylene and propylene, partially soluble in xylene at ambient temperature; and
c) 10-22% of polyethylene having an intrinsic viscosity value ranging from 1 to 3 dl/g and optionally containing recurring units deriving from propylene in amounts up to lower than 10% (HDPE).

These compositions, due to the presence of component c), are endowed with relatively low stiffness, high impact resistance and particularly improved whitening resistance with respect to heterophasic compositions comprising only component (a) and (b).

It is still felt the need of materials having increased performance thanks to an improved balance of properties.

It has now surprisingly been found that it is possible to obtain polyolefin compositions comprising at least a butene-1 (co)polymer (plastomer) endowed with relatively low stiffness, good impact resistance and tensile properties and excellent whitening resistance together with improved optical properties (haze and gloss).

Thus, an embodiment of the present invention consists of a polyolefin composition comprising, in percentage by weight based on the weight sum of the components (a1), (a2) and (b):
a1) 16-78 % of a propylene homopolymer or copolymer containing at most 15% of ethylene and/or C₄-C₁₀ α-olefin(s), having an isotactic index over 80%; and
a2) 6-44% of a copolymer of ethylene with one or more C₄-C₁₀ α-olefin(s) containing from 10 to 40%, preferably from 15 to 35%,of said C₄-C₁₀ α-olefin(s);
b) 3-70% of a butene-1 (co)polymer having:
   - a content of butene-1 derived units of 80% wt or more,
   - flexural modulus (MEF) of 60 MPa or less.

Components (a1) (a2) and (b) can be blended together. Preferred are the polyolefin compositions wherein component (a1) and (a2) are obtained by sequential polymerization (reactor blend). The term "copolymer" as used herein refers to both polymers with two different recurring units and polymer with more than two different recurring units in the chain, such as terpolymers.

The term "butene-1 (co)polymer" as used herein refers to butene-1 homopolymers, copolymers and compositions thereof, having from elastomeric to plastomeric behaviour and generically also referred to as "plastomers". The "butene-1 (co)polymer" component (b) exhibit low flexural modulus and preferably low crystallinity (less than 40% measured via X-ray, preferably less than 30).

The composition according to the invention typically has a value of melt flow rate "L" ranging from 10 to 30, preferably 15 to 26, g/10 min. Preferably, the composition of the present invention exhibits a flexural modulus value of at least 650 MPa, more preferably from 700 to 950 MPa, a value of Izod impact resistance at 23° C of more than 16 kJ/m², preferably of more than 20 kJ/m², and the one at 0° C of more than 4 kJ/m².

The composition advantageously exhibit a stress-whitening resistance corresponding to the diameter of the whitened area, caused by a ram falling from a 76 cm height equal to or less than 1.00 cm, preferably of 0 cm. The value 0 cm means no whitening detectable even if a deformation of the surface caused by the strike can be observed (i.e. no blush is exhibited after the ram impact).

Component (a1) and (a2) can be prepared separately or as above said preferably by a sequential polymerization. The polymerization, which can be continuous or batch, is carried out following known techniques and operating in liquid phase, in the presence or not of inert diluent, or in gas phase, or by mixed liquid-gas techniques. Preferably both components (a1) and (a2) are prepared in gas phase.

Reaction time, pressure and temperature relative to the two steps are not critical, however it is best if the temperature is from 20 to 100 °C. The pressure can be atmospheric or higher.

The regulation of the molecular weight is carried out by using known regulators, hydrogen in particular. Such polymerization is preferably carried out in the presence of stereospecific Ziegler-Natta catalysts, particularly advantageous are the catalysts described in US patent 4 399 054 and European patent application EP-A-0 045 977.

The component (b) is a butene-1 (co) polymer typically exhibiting from elastomeric to plastomeric behaviour and can be a homopolymer or a copolymer of butene-1 with one or more α-olefins, or a composition of copolymers of butene-1 with other alfa-olefins. Preferred as α-olefins, which are or may be present as comonomers in the component (b) of the compositions of the invention, are ethylene, propylene, 1-pentene, 1-hexene, 4-methyl-1-pentene and 1-octene. Particularly preferred as comonomers are propylene and ethylene.

The Component (b) is preferably selected from the group consisting of:
(b1) a butene-1 homopolymer or copolymer of butene-1 with at least another α-olefin, preferably with propylene as comonomer, having
   - content of butene-1 units in the form of isotactic pentads (mmmm%) from 25 to 55%;
   - intrinsic viscosity [η] measured in tetraline at 135°C from 1 to 3dL/g;
   - content of xylene insoluble fraction at 0°C from 3 to 60%;
(b2) a butene-1/ethylene copolymer having a content of butene-1 units in form of isotactic pentads (mmmm%) equal to or higher than 96%, and a total content of ethylene units in the range of 10-25% mol corresponding to 5-15 %wt. The butene-1/ethylene copolymer (b2) can be alternatively and advantageously a composition consisting of:
   - a copolymer having less than 10% mol of ethylene as a comonomer for example 1 to 9% mol, and
   - another copolymer having a content of ethylene as comonomer higher than 10% mol and for example in the range 15-40%mol.
   The highly modified component has typically an elastomeric behaviour and the component (b2) can be consequently an heterophasic composition.
(b3) a butene-1/ethylene copolymer or a butene-1/ethylene/propylene terpolymer having the following properties:
   - distribution of molecular weights (Mw/Mn) measured by GPC lower than 3;
   - no melting point (TmII) detectable at the DSC measured according to the DSC method described herein below;

Component (b3) can have a measurable melting enthalpy after aging. Particularly, measured after 10 days of aging at room temperature, the melting enthalpy of (b3) can be of less than 25 J/g, preferably of from 4 to 20 J/g.

The butene-1 (co)polymer (b1) of the present invention can be prepared by polymerization of the monomers in the presence of a low stereospecificity Ziegler-Natta catalyst comprising (A) a solid component comprising a Ti compound and an internal electron-donor compound supported on MgCl2; (B) an alkylaluminum compound and, optionally, (C) an external electron-donor compound. In a preferred aspect of the process for the preparation of the (co)polymers (b1) of the invention the external electron donor compound is not used in order not to increase the stereoregulating capability of the catalyst. In cases in which the external donor is used, its amount and modalities of use should be such as not to generate a too high amount of highly stereoregular polymer such as it is described in the International application WO2006/042815 A1. The butene-1 copolymers thus obtained typically have a content of isotactic pentads (mmmm%) from 25 to 56%.

The Butene-1 (co)polymers (b2) can be prepared by polymerization of the monomer in presence of a stereospecific Ziegler Natta catalyst wherein the external electron donor compound (C) is chosen and used in amounts according to the process described in the international application WO2004/048424 A1, thus obtaining a content of butene-1 units in the form of isotactic pentads (mmmm%) typically higher than 96% even at a high content of comonomer (ethylene) such as higher than 10% by moles. The content of butene-1 units in form of isotactic pentads is herewith referring to the known definition of pentad tacticity for polybutene-1 homo and co-polymers found e.g. in the cited documents WO2006/042815 A1 and WO2004/048424 A1. The % value of pentad tacticity (mmmm%), provided in the experimental part for butene-1 homo and copolymers, is the percentage of stereoregular pentads (isotactic pentad) as calculated from the relevant pentad signals (peak areas) in the NMR region of branched methylene carbons (around 27.73 ppm assigned to the BBBBB isotactic sequence), with due consideration of the superposition between stereoirregular pentads and of those signals, falling in the same region, due to the alfa-olefin comonomer (e.g propylene derived units when present).

The polymerization process both for butene-1 (co)polymers (b1) and (b2) can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred.

The polymerization is generally carried out at temperature of from 20 to 12°C, preferably of from 40 to 90°C. The polymerization can be carried out in one or more reactors that can work under same or different reaction conditions such as concentration of molecular weight regulator, comonomer concentration, external electron donor concentration, temperature, pressure.

The butene-1 copolymer (b3) can be obtained by contacting under polymerization conditions butene-1 and ethylene and eventually propylene in the presence of a catalyst system obtainable by contacting:
(A) a stereorigid metallocene compound;
(B) an alumoxane or a compound capable of forming an alkyl metallocene cation; and, optionally,
(C) an organo aluminum compound.

Preferably the stereorigid metallocene compound (A) belongs to the following formula (I): 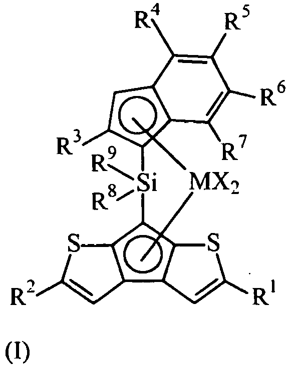 wherein:
M is an atom of a transition metal selected from those belonging to group 4; preferably M is zirconium;
X, equal to or different from each other, is a hydrogen atom, a halogen atom, a R, OR, OR'O, OSO2CF3, OCOR, SR, NR2 or PR2 group wherein R is a linear or branched, saturated or unsaturated C1-C20-alkyl, C3-C20-cycloalkyl, C6-C20-aryl, C7-C20-alkylaryl or C7-C20-arylalkyl radical, optionally containing heteroatoms belonging to groups 13-17 of the Periodic Table of the Elements; and R' is a C1-C20-alkylidene, C6-C20-arylidene, C7-C20-alkylarylidene, or C7-C20-arylalkylidene radical; preferably X is a hydrogen atom, a halogen atom, a OR'O or R group; more preferably X is chlorine or a methyl radical;
R1, R2, R5, R6, R7, R8 and R9, equal to or different from each other, are hydrogen atoms, or linear or branched, saturated or unsaturated C1-C20-alkyl, C3-C20-cycloalkyl, C6-C20-aryl, C7-C20-alkylaryl or C7-C20-arylalkyl radicals, optionally containing heteroatoms belonging to groups 13-17 of the Periodic Table of the Elements; or R5 and R6, and/or R8 and R9 can optionally form a saturated or unsaturated, 5 or 6 membered rings, said ring can bear C1-C20 alkyl radicals as substituents; with the proviso that at least one of R6 or R7 is a linear or branched, saturated or unsaturated C1-C20-alkyl radical, optionally containing heteroatoms belonging to groups 13-17 of the Periodic Table of the Elements; preferably a C1-C10-alkyl radical;
preferably R1, R2, are the same and are C1-C10 alkyl radicals optionally containing one or more silicon atoms; more preferably R1 and R2 are methyl radicals;
R8 and R9, equal to or different from each other, are preferably C1-C10 alkyl or C6-C20 aryl radicals; more preferably they are methyl radicals;
R5 is preferably a hydrogen atom or a methyl radical; or can be joined with R6 to form a saturated or unsaturated, 5 or 6 membered rings, said ring can bear C1-C20 alkyl radicals as substituents;
R6 is preferably a hydrogen atom or a methyl, ethyl or isopropyl radical; or it can be joined with R5 to form a saturated or unsaturated, 5 or 6 membered rings as described above;
R7 is preferably a linear or branched, saturated or unsaturated C1-C20-alkyl radical, optionally containing heteroatoms belonging to groups 13-17 of the Periodic Table of the Elements; preferably a C1-C10-alkyl radical; more preferably R7 is a methyl or ethyl radical; otherwise when R6 is different from a hydrogen atom, R7 is preferably a hydrogen atom
R3 and R4, equal to or different from each other, are linear or branched, saturated or unsaturated C1-C20-alkyl radicals, optionally containing heteroatoms belonging to groups 13-17 of the Periodic Table of the Elements; preferably R3 and R4 equal to or different from each other are C1-C10-alkyl radicals; more preferably R3 is a methyl, or ethyl radical; and R4 is a methyl, ethyl or isopropyl radical;

Preferably the compounds of formula (I) have formula (Ia) or (Ib):

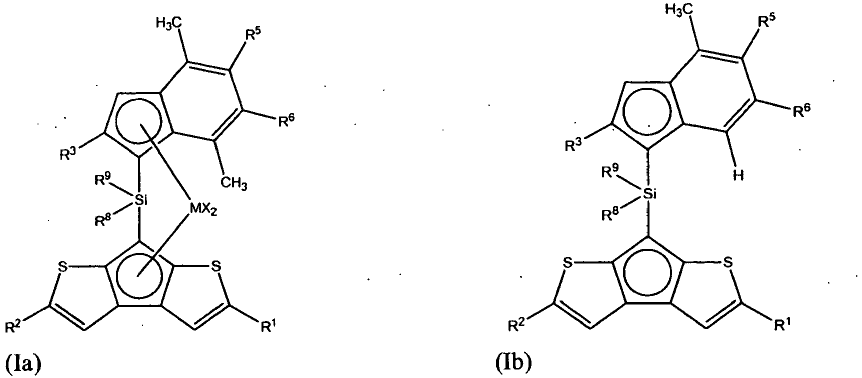

Wherein
M, X, R1, R2, R5, R6, R8 and R9 have been described above;
R3 is a linear or branched, saturated or unsaturated C1-C20-alkyl radical, optionally containing heteroatoms belonging to groups 13-17 of the Periodic Table of the Elements; preferably R3 is a C1-C10-alkyl radical; more preferably R3 is a methyl, or ethyl radical.
Alumoxanes used as component (B) can be obtained by reacting water with an organoaluminium compound of formula HjAlU3-j or HjA12U6-j, where U substituents, same or different, are hydrogen atoms, halogen atoms, C1-C20-alkyl, C3-C20-cyclalkyl, C6-C20-aryl, C7-C20-alkylaryl or or C7-C20-arylalkyl radical, optionally containing silicon or germanium atoms with the proviso that at least one U is different from halogen, and j ranges from 0 to 1, being also a non-integer number. In this reaction the molar ratio of At/water is preferably comprised between 1:1 and 100:1. The molar ratio between aluminium and the metal of the metallocene generally is comprised between 10:1 and 20000:1, and more preferably between 100:1 and 5000:1. The alumoxanes used in the catalyst according to the invention are considered to be linear, branched or cyclic compounds containing at least one group of the type: 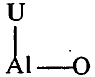 wherein the substituents U, same or different, are described above. In particular, alumoxanes of the formula: 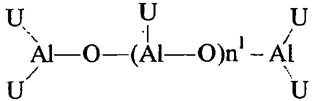 can be used in the case of linear compounds, wherein n1 is 0 or an integer from 1 to 40 and the substituents U are defined as above, or alumoxanes of the formula: 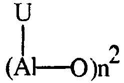 can be used in the case of cyclic compounds, wherein n2 is an integer from 2 to 40 and the U substituents are defined as above. Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO). Particularly interesting cocatalysts are those described in WO 99/21899 and in WO01/21674 in which the alkyl and aryl groups have specific branched patterns. Non-limiting examples of aluminium compounds according to WO 99/21899 and WO01/21674 are:
   tris(2,3,3-trimethyl-butyl)aluminium, tris(2,3-dimethyl-hexyl)aluminium, tris(2,3-dimethyl-butyl)aluminium, tris(2,3-dimethyl-pentyl)aluminium, tris(2,3-dimethylheptyl)aluminium, tris(2-methyl-3-ethyl-pentyl)aluminium, tris(2-methyl-3-ethylhexyl)aluminium, tris(2-methyl-3-ethyl-heptyl)aluminium, tris(2-methyl-3-propyl-hexyl)aluminium, tris(2-ethyl-3-methyl-butyl)aluminium, tris(2-ethyl-3-methylpentyl)aluminium, tris(2,3-diethyl-pentyl)aluminium, tris(2-propyl-3-methylbutyl)aluminium, tris(2-isopropyl-3-methyl-butyl)aluminium, tris(2-isobutyl-3-methylpentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethylpentyl)aluminium, tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenylbutyl)aluminium, tris(2,3-dimethyl-3-phenyl-butyl)aluminium, tris(2-phenylpropyl)aluminium, tris[2-(4-fluoro-phenyl)-propyl]aluminium, tris[2-(4-chloro-phenyl)-propyl]aluminium, tris[2-(3-isopropyl-phenyl)-propyl]aluminium, tris(2-phenylbutyl)aluminium, tris(3-methyl-2-phenyl-butyl)aluminium, tris(2-phenyl-pentyl)aluminium, tris[2-(pentafluorophenyl)-propyl]aluminium, tris[2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBAL), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula D+E-, wherein D+ is a Br⌀nsted acid, able to donate a proton and to react irreversibly with a substituent X of the metallocene of formula (I) and E- is a compatible anion, which is able to stabilize the active catalytic species originating from the reaction of the two compounds, and which is sufficiently labile to be able to be removed by an olefinic monomer. Preferably, the anion E- comprises of one or more boron atoms. More preferably, the anion E- is an anion of the formula BAr4(-); wherein the substituents Ar which can be identical or different are aryl radicals such as phenyl, pentafluorophenyl or bis(trifluoromethyl)phenyl. Tetrakis-pentafluorophenyl borate is particularly preferred examples of these compounds are described in WO 91/02012. Moreover, compounds of the formula BAr3 can conveniently be used. Compounds of this type are described, for example, in the published International patent application WO 92/00333. Other examples of compounds able to form an alkylmetallocene cation are compounds of formula BAr3P wherein P is a substituted or unsubstituted pyrrol radicals.. These compounds are described in WO01/62764. Other examples of cocatalyst can be found in EP-A-0 775 707 and DE 19917985. Compounds containing boron atoms can be conveniently supported according to the description of DE-A-19962814 and DE-A-19962910. All these compounds containing boron atoms can be used in a molar ratio between boron and the metal of the metallocene comprised between 1:1 and 10:1; preferably 1:1 and 2.1; more preferably about 1:1

Non limiting examples of compounds of formula D+E- are:
Triethylammoniumtetra(phenyl)borate,
Trimethylammoniumtetra(tolyl)borate,
Tributylammoniumtetra(tolyl)borate,
Tributylammoniumtetra(pentafluorophenyl)borate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylaniliniumtetra(phenyl)borate,
N,N-Dimethylaniliniumtetrakis(pentafluorophenyl)boratee,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(phenyl)aluminate,
Ferroceniumtetrakis(pentafluorophenyl)borate,
N,N-Dimethylaniliniumtetrakis(pentafluorophenyl)borate.

Organic aluminum compounds used as compound C) are those of formula HjAlU3-j or HjA12U6-j described above. The catalysts of the present invention can also be supported on an inert carrier. This is achieved by depositing the metallocene compound A) or the product of the reaction thereof with the component B), or the component B) and then the metallocene compound A) on an inert support such as, for example, silica, alumina, Al-Si, Al-Mg mixed oxides, magnesium halides, styrene/divinylbenzene copolymers, polyethylene or polypropylene. The supportation process is carried out in an inert solvent such as hydrocarbon for example toluene, hexane, pentane or propane and at a temperature ranging from 0°C to 100°C, preferably the process is carried out at a temperature ranging from 25°C to 90°C or the process is carried out at room temperature.

A suitable class of supports which can be used is that constituted by porous organic supports functionalized with groups having active hydrogen atoms. Particularly suitable are those in which the organic support is a partially crosslinked styrene polymer. Supports of this type are described in European application EP-A-0 633 272. Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The process for the polymerization of butene-1 and eventually ethylene and/or propylene according to the invention can be carried out in the liquid phase in the presence or absence of an inert hydrocarbon solvent, such as in slurry, or in the gas phase. The hydrocarbon solvent can either be aromatic such as toluene, or aliphatic such as propane, hexane, heptane, isobutane or cyclohexane. Preferably the copolymers (b3) of the present invention are obtained by a solution process, i.e. a process carried out in liquid phase wherein the polymer is completely or partially soluble in the reaction medium.

As a general rule, the polymerization temperature is generally comprised between -100°C and +200°C preferably comprised between 40° and 90°C, more preferably between 50°C and 80°C. The polymerization pressure is generally comprised between 0,5 and 100 bar.

The lower the polymerization temperature, the higher are the resulting molecular weights of the polymers obtained.

The polyolefin composition according to the present invention can be prepared according to conventional methods, for examples, mixing component (A), component (B) or the concentrate thereof and well known additives in a blender, such as a Henschel or Banbury mixer, to uniformly disperse the said components, at a temperature equal to or higher than the polymer softening temperature, then extruding the composition and pelletizing.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are preferably added to the compositions of the present invention in quantities ranging from 0.05 to 2% by weight, more preferably from 0.1 to 1% by weight with respect to the total weight.

The particulars are given in the following examples, which are given to illustrate, without limiting, the present invention.

The following analytical methods have been used to determine the properties reported in the detailed description and in the examples.

### - Comonomer contents: determined by IR spectroscopy or by NMR (when specified).

Particularly for the butene-1 copolymers component (B) the amount of comonomers was calculated from¹³ C-NMR spectra of the copolymers of the examples. Measurements were performed on a polymer solution (8-12 % by weight) in dideuterated 1,1,2,2-tetrachloroethane at 120 °C. The ¹³C NMR spectra were acquired on a Bruker AV-600 spectrometer operating at 150.91 MHz in the Fourier transform mode at 120 °C using a 90° pulse, 15 seconds of delay between pulses and CPD (WALTZ16) to remove ¹H-¹³C coupling. About 1500 transients were stored in 32K data points using a spectral window of 60 ppm (0-60 ppm).

### Copolymer Composition

Diad distribution is calculated from ¹³C NMR spectra using the following relations:
PP = 100 I₁/Σ
PB = 100 I₂/Σ
BB = 100 (I₃ - I₁₉)/Σ
PE = 100 (I₅ + I₆)/Σ
BE =100 (I₉ + I₁₀)/Σ
EE = 100 (0.5(I₁₅ + I₆ + I₁₀) + 0.25 (I₁₄))/Σ
Where Σ=I₁+I₂+I₃-I₁₉+I₅+I₆+I₉+I₁₀+0.5(I₁₅+I₆+I₁₀)+0.25(I₁₄)

The molar content is obtained from diads using the following relations:
P (m%)= PP + 0.5 (PE+PB)
B (m%)= BB + 0.5 (BE+PB)
E (m%)= EE + 0.5 (PE+BE)

I₁, I₂, I₃, I₅, I₆, I₉, I₆, I₁₀, I₁₄, I₁₅, I₁₉ are integrals of the peaks in the ¹³C NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150, (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)).

**Table A.**

| **I** | **Chemical Shift (ppm)** | **Carbon** | **Sequence** |
|---|---|---|---|
| 1 | 47.34 - 45.60 | S_{αα} | PP |
| **2** | 44.07 - 42.15 | S_{αα} | PB |
| **3** | 40.10 - 39.12 | S_{αα} | BB |
| **4** | 39.59 | T_{δδ} | EBE |
| **5** | 38.66-37.66 | S_{αγ} | PEP |
| **6** | 37.66-37.32 | S_{αδ} | PEE |
| **7** | 37.24 . | T_{βδ} | BBE |
| **8** | 35.22 - 34.85 | T_{ββ} | *XBX* |
| **9** | 34.85 - 34.49 | S_{αγ} | *BBE* |
| **10** | 34.49-34.00 | S_{αδ} | *BEE* |
| **11** | 33.17 | T_{δδ} | *EPE* |
| **12** | 30.91-30.82 | T_{βδ} | *XPE* |
| **13** | 30.78-30.62 | S_{γγ} | XEEX |
| **14** | 30.52-30.14 | S_{γδ} | XEEE |
| **15** | 29.87 | S_{δδ} | EEE |
| **16** | 28.76 | T_{ββ} | XPX |
| **17** | 28.28 - 27.54 | 2B₂ | XBX |
| **18** | 27.54-26.81 | S_{βδ} + 2B₂ | BE, PE, BBE |
| **19** | 26.67 | 2B₂ | EBE |
| **20** | 24.64-24.14 | S_{ββ} | XEX |
| **21** | 21.80 - 19.50 | CH₃ | P |
| **22** | 11.01 - 10.79 | CH₃ | B |

- Fractions soluble and insoluble in xylene at 25 °C (XS 25°C): 2.5 g of polymer are dissolved in 250 mL of xylene at 135° C under agitation. After 20 minutes the solution is allowed to cool to 25° C, still under agitation, and then allowed to settle for 30 minutes. The precipitate is filtered with filter paper, the solution evaporated in nitrogen flow, and the residue dried under vacuum at 80° C until constant weight is reached. Thus one calculates the percent by weight of polymer soluble (Xilene Solubles - XS) and insoluble at room temperature (25° C).

The percent by weight of polymer insoluble in xylene at ambient temperature is considered the isotactic index of the polymer. This value corresponds substantially to the isotactic index determined by extraction with boiling n-heptane, which by definition constitutes the isotactic index of polypropylene.
- Fractions soluble and insoluble in xylene at 0°C (XS 0°C): 2.5 g of the butene-1 (co)polymers (component (b)) are dissolved in 250 ml of xylene at 135°C under agitation. After 30 minutes the solution is allowed to cool to 100°C, still under agitation, and then placed in a water and ice bath to cool down to 0°C. Than, the solution is allowed to settle for 1 hour in the water and ice bath. The precipitate is filtered with filter paper. During the filtering, the flask is left in the water and ice bath so as to keep the flask inner temperature as near to 0°C as possible. Once the filtering is finished, the filtrate temperature is balanced at 25°C, dipping the volumetric flask in a water-flowing bath for about 30 minutes and then, divided in two 50 ml aliquots. The solution aliquots are evaporated in nitrogen flow, and the residue dried under vacuum at 80° C until constant weight is reached. The weight difference in between the two residues must be lower than 3%; otherwise the test has to be repeated. Thus, one calculates the percent by weight of polymer soluble (Xilene Solubles at 0°C = XS 0°C) from the everage weight of the residues. The insoluble fraction in o-xylene at 0°C (Xylene Insolubles at 0°C = XI 0°C) is: *XI%*0°C = 100- XS%0°C
   Melt flow rate: Determined according to ISO method 1133 at 230° C and 2.16 kg (condition L) where not differently specified.
- Intrinsic Viscosity [η]: Measured in tetrahydronaphthalene (tetralin) at 135° C.
- Flexural modulus: Determined according to ISO method 178.
- Tg determination via DMTA analysis
   Molded specimen of 76mm by 13mm by 1 mm are fixed to the DMTA machine for tensile stress. The frequency of the tension and relies of the sample is fixed at 1 Hz. The DMTA translate the elastic response of the specimen starting form -100°C to 130°C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.
   The glass transition temperature Tg is assumed to be the temperature at the maximum of the curve E'/E" = tan (δ) vs temperature.
- Determination of X-ray crystallinity
   The X-ray crystallinity was measured with an X-ray Diffraction Powder Diffractometer using the Cu-Kα1 radiation with fixed slits and collecting spectra between diffraction angle 20 = 5° and 2Θ= 35° with step of 0.1° every 6 seconds.
   Measurement were performed on compression molded specimens in the form of disks of about 1.5-2.5 mm of thickness and 2.5-4.0 cm of diameter. These specimens are obtained in a compression molding press at a temperature of 200°C ± 5°C without any appreciable applied pressure for 10 minutes. Then applying a pressure of about 10Kg/cm² for about few second and repeating this last operation for 3 times.
   The diffraction pattern was used to derive all the components necessary for the degree of cristallinity by defining a suitable linear baseline for the whole spectrum and calculating the total area (Ta), expressed in counts/sec 2Θ, between the spectrum profile and the baseline. Then a suitable amorphous profile was defined, along the whole spectrum, that separate, according to the two phase model, the amorphous regions from the crystalline ones. Thus it is possible to calculate the amorphous area (Aa), expressed in counts/sec·2Θ, as the area between the amorphous profile and the baseline; and the cristalline area (Ca), expressed in counts/sec·2Θ, as Ca = Ta- Aa
   The degree of cristallinity of the sample was then calculated according to the formula:
   %Cr=100xCa/Ta
- The melting points of the polymers (TmII) were measured by Differential Scanning Calorimetry (D.S.C.) on a Perkin Elmer DSC-7 instrument, according to the following method.
   A weighted sample (5-10 mg) obtained from the polymerization was sealed into aluminum pans and heated at 200°C with a scanning speed corresponding to 20°C/minute. The sample was kept at 200°C for 5 minutes to allow a complete melting of all the crystallites. Successively, after cooling to-20°C with a scanning speed corresponding to 10°C/minute, the peak temperature was taken as crystallization temperature (Tc). After standing 5 minutes at -20°C, the sample was heated for the second time at 200°C with a scanning speed corresponding to 10°C/min. In this second heating run, the peak temperature was taken as the melting temperature of the PB-1 crystalline form II (TmII) and the area as global melting enthalpy (ΔHfII).
- The melting enthalpy after 10 days was measured as follows by using the Differential Scanning Calorimetry (D.S.C.) on an Perkin Elmer DSC-7 instrument.
   A weighted sample (5-10 mg) obtained from the polymerization was sealed into aluminum pans and heated at 200°C with a scanning speed corresponding to 20°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature was taken as the melting temperature (Tm), substantially corresponding to (TmII), and the area as global melting enthalpy after 10 days (ΔHf), when this was the only peak observed. The melting temperature of crystalline form I (TmI) can also be measured in this condition when present either as a shoulder peak in the (Tm) peak or as a distinct peak at higher temperatures.
- Determination of isotactic pentads content: 50 mg of each sample of component (b) were dissolved in 0.5 mL of C₂D₂Cl₄.
   The ¹³C NMR spectra were acquired on a Bruker DPX-400 (100.61 Mhz, 90° pulse, 12s delay between pulses). About 3000 transients were stored for each spectrum; mmmm pentad peak (27.73 ppm) was used as reference.
   The microstructure analysis was carried out as described in literature (Macromolecules 1991, 24, 2334-2340, by Asakura T. et Al.. and Polymer, 1994, 35, 339, by Chujo R. et Al.).
- Molecular weight (M̅ₙ, M̅_{w}, M̅_{z}): Measured by way of gel permeation chromatography (GPC) in 1,2,4-trichlorobenzene.
- Izod impact resistance: Determined according to ISO method 180/1A.
- Density: According to ISO 1183. The method ISO is based on observing the level to which a test specimen sinks in a liquid column exhibiting a density gradient.
   Standard specimens are cut from strands extruded from a grader (MFR measurement). The polybutene-1 specimen is putted in an autoclave at 2000 bar for 10min at a room temperature in order to accelerate the transformation phase of the polybutene. After this the specimen is inserted in the gradient column where density is measured according to ISO 1183.
- Tensile properties (Tensile Stress at Break, Elongation at Break, Stress at Yield, Elongation at Yield): According to ISO 527-1,-2.

### Preparation of the plaque specimens

### - Plaques for D/B and stress whitening measurement:

Plaques for D/B measurement, having dimensions of 127x127x1.5 mm were prepared with an injection press Negri Bossi^{™} type (NB 90) with a clamping force of 90 tons. The mould is a rectangular plaque (127x127x1.5. mm).

The main process parameters are reported below:
- Back pressure (bar): 20
- Injection time (s): 3
- Maximum Injection pressure (MPa): 14
- Hydraulic injection pressure (MPa): 6-3
- First holding hydraulic pressure (MPa): 4±2
- First holding time (s): 3
- Second holding hydraulic pressure (MPa): 3±2
- Second holding time (s): 7
- Cooling time (s): 20
- Mould temperature (°C): 60
- The melt temperature was between 220 and 280 °C.

### - Plaques for haze measurement

Plaques for haze measurement, 1 mm thick, were prepared by injection moulding with injection time of 1 second, temperature of 230 °C, mould temperature of 40 °C.

The injection press was a Battenfeld™ type BA 500CD with a clamping force of 50 tons. The insert mould lead to the moulding of two plaques (55x60x1 mm each).

### - Ductile/Brittle transition temperature (D/B) :

determined according to the method specified below.

The bi-axial impact resistance was determined through impact with an automatic, computerised striking hammer.

The circular test specimens were obtained from plaques, prepared as described above, by cutting with circular hand punch (38 mm diameter). They were conditioned for at least 12 hours at 23°C and 50 RH and then placed in a thermostatic bath at testing temperature for 1 hour.

The force-time curve was detected during impact of a striking hammer (5.3 kg, hemispheric punch with a 1.27 cm diameter) on a circular specimen resting on a ring support. The machine used was a CEAST 6758/000 type model No. 2. D/B transition temperature means the temperature at which 50% of the samples undergoes fragile break when submitted to the said impact test.

### - Haze on plaque

determined according to the method specified below.

The plagues were conditioned for 12 to 48 hours at relative humidity of 50±5% and temperature of 23±1° C.

The instrument used for the test was a Gardner photometer with Haze-meter UX-10 equipped with a G.E. 1209 lamp and filter C. The instrument calibration was made by carrying out a measurement in the absence of the sample (0% Haze) and a measurement with intercepted light beam (100% Haze).

The measurement and computation principle are given in the norm ASTM-D1003.

The haze measurement was carried out on five plaques.

### - Gloss on plaque

10 rectangular specimens (55x60x1 mm) for each polymer to be tested are injection molded using a Battenfeld BA500CD operated under the following conditions:
- Screw speed: 120 rpm
- Back pressure: 10 bar
- Mould temperature: 40°C
- Melt temperature: 260°C
- Injection time: 3 sec
- First holding time: 5 sec
- Second holding time: 5 sec
- Cooling time (after second holding): 10 sec

The value of the injection pressure should be sufficient to completely fill the mould in the above mentioned indicated time span.

By a glossmeter the fraction of luminous flow reflected by the examined specimens surface is measured, under an incident angle of 60°. The value reported in table 2 corresponds to the mean gloss value over 10 specimens for each tested polymer

Gloss data were determined according to internal method MA 17021, available upon request. The glossmeter used is a photometer Zehntner model ZGM 1020 or 1022 set with an incident angle of 60°. The measurement principle is given in the Norm ASTM D2457. The apparatus calibration is done with a sample having a known gloss value.

### - Stress-whitening resistance:

the resistance to whitening at ambient temperature (about 23°C) is determined by subjecting small discs of the polymer to be tested (diameter 38 mm, thickness 1.5 mm, obtained from plaques prepared as described above) to the impact of a dart dropping from different heights. The dart has diameter of 1.27 mm and a weight of 263 g. The stress-whitening resistance is expressed as the diameter of the whitened area (average value over 10 specimens tested for each dropping height). A value 0 means no whitening detectable even if a deformation of the surface caused by the strike can be observed. A deformation without whitening is normally observed at least at the highest falling height of 76 cm. Both the height and the width (diameter) of the whitened area are recorded and reported in table 2.

### EXAMPLES

The data in the examples show that the compositions according to the present invention exhibit excellent whitening resistance (no blush), good Izod impact resistance and relatively low stiffness together with good optical properties (low haze).

The valuable combination of properties makes the compositions according to the invention suitable for application in a variety of fields from the automotive household appliance and containers and film for packaging. Particularly when transparency is needed, formed articles such as containers, battery casings and household can be produced advantageously with the composition of the invention by injection molding. Bottles impact resistant at low temperature and collapsible bottles can be produced by blow molding; and blisters and containers by thermoforming.

In table 1a it is reported the structure and properties of an heterophasic composition component (a) (HECO1) according to the invention consisting of a crystalline propylene homopolymer matrix (a1) and an elastomeric ethylene/butene-1 copolymer component (a2).

Further in table 1a it is reported the structure and properties of a comparative heterophasic composition component (a) (HECO2) consisting of a crystalline propylene homopolymer matrix and an elastomeric ethylene/propylene copolymer component.

In table 1b it is reported the structure and properties of the butene-1 (co)polymers (PB1, PB2, PB3 and PB4) used as component (b) according to the invention.

PB1 is a butene-1 homopolymer and PB2 is a butene-1/propylene copolymer. PB1 and PB2 are (b1) components prepared according to the process described in the International application WO2006/042815 A1.

PB3 is a butene-1/ethylene copolymer composition (b2) obtained according to the process described in the international application WO2004/048424 by sequential copolymerization carried out in two liquid-phase stirred reactors connected in series in which liquid butene-1 constituted the liquid medium. The catalyst system was injected into the first reactor working under the following conditions:
Temperature (°C): 75°C
EthyleneButene feed ratio= abt. 5%
Hydrogen/Butene feed ratio= abt. 1200 ppm vol
After 2 hours of polymerization the content of the first reactor was transferred into the second reactor where the polymerization continued under the same conditions with the only difference that the ethylene feed was discontinued. The polymerization was stopped after 70 minutes and the final copolymer was characterized. On the basis of the polymerization activity about 70% of the total copolymer was produced in the first polymerization step and showed an ethylene content of about 10%wt. The remaining 30% produced in the second reactor, had a calculated ethylene content of about 0.6%wt. The ethylene content of the final product is about 7.1%wt.

PB4 is a metallocene butene-1 (co)polymer (b3) prepared according to the process described above.

Further in table 1b it is reported the structure and properties of PBc a crystalline commercial butene-1 homopolymer.

In table 2 and 3 composition and properties of the blends of component (a) and (b) are reported

### Example 1-4

Component (a) and (b) as indicated in table 2 are blended in an extruder. The polymer particles are extruded under nitrogen atmosphere in a twin screw extruder, at a rotation speed of 250 rpm and a melt temperature of 200-250° C.

### Comparative Example 5c.

The same Component (a) used in examples 1-4 is blended with a commercial HDPE having MFR (190 °C; 2,16 Kg) of 8 g/10min, intrinsic viscosity of 1.2 dUg and density of 0.963 g/cm³.

### Example 6 and comparative examples 7c-8c-9c

Component (a) and (b) as indicated in table 3 are blended in an extruder. The polymer particles are extruded under nitrogen atmosphere in a twin screw extruder, at a rotation speed of 250 rpm and a melt temperature of 200-250° C.

**Table 1a - HECO materials**

| Heterophasic copolymers | | **HECO1** | **HECO2 comparative** |
|---|---|---|---|
| **Matrix component (a1)** | **Type** | Homopolymer | Homopolymer |
| Split | % | 66 | 70 |
| MFR"L"(230 °C; 2,16 Kg) | g/10min | 43.2 | 77 |
| XS 25°C | % | 2.0 | 2.0** |
| **Elastomer component (a2)** | **Type** | C2C4 | C2C3 |
| Split | % | 34 | 31 |
| Ethylene / comonomer - weight ratio | - | 80/20 | 47/53 |

| **Final Product** | | | |
|---|---|---|---|
| MFR "L"(230 °C, 2,16 Kg) | g/10min | 25.2 | 17 |
| C2 content | % | 27.5 | 14,5 |
| C4 content | % | 6.9 | - |
| Xylene Soluble, XS 25°C | % | 19.9 | 28 |
| Intrinsic Viscosity of Xylene Soluble fraction at 25°C | dl/g | 1.1 | 3.1 |

| | | | |
|---|---|---|---|
| Corresponding to an Isotactic Index of about 98% | | | |

**Table 1b - Butene-1 (co)polymer component (b)**

| | | **PB1** | **PB2** | **PB3** | **PB4** | **[PBc** |
|---|---|---|---|---|---|---|
| Type | | Homo | C4C3 | C4C2 | C4C2C3 | Homo |
| comonomer content NMR | | | | | | |
| C3 | %wt | | 4.1 | | 6,5 | |
| C2 | %wt | | | 7.1 | 5.9 | |
| Intrinsic Viscosity | dl/g | 2.49 | 2.31 | 1.75 | 1,4 | |
| Melt Flow Rate - @ 190/2.16 | g/10min | 0.37 | 0.5 | 0.38 | 1.81 | 0.4 |
| Density | | 0.883 | 0.886 | 0.892 | 0.8743 | 0.914 |
| Flexural elastic modulus (ISO 178) | MPa | 25 | 23.7 | 39 | 27 | 450 |
| Tg (DMTA) | °C | -9 | -9 | -22 | -24 | |
| % cristall. RX | % | | 25 | | 8 | |
| DSC Tm I | °C | 107.8 | | | 40 | 127.3 |
| DSC Tm II | °C | 103.8 | 96 | 93 | nd | 115.9 |
| S.X.0/0 °C Soluble Total | % | 57.3 | | 73 | | |
| mmmm% | | 44.1 | 51.3 | 96.6 | 95.9 | 98 |
| Mw/Mn | | | 6.4 | | 2.8 | 3.9 |
| ΔHf after 10 days | J/g | | | | 17 | |

| | | | | | | |
|---|---|---|---|---|---|---|
| Nd = not detectable | | | | | | |

**Table 2 - Blends**

| **examples** | | | **Ref. 1** | **1** | **2** | **3** | **3** | **4** | | **5c** | |
|---|---|---|---|---|---|---|---|---|---|---|---|
| %wt component (a) | HECO1 | | 100 | 90 | 95 | 90 | 90 | 95 | 90 | 95 | 90 |
| %wt component (b) | | | neat | 10 | 5 | 10 | 10 | 5 | 10 | 5 | 10 |
| Component (b) | | | | PB1 | PB2 | | PB3 | PB4 | | HDPE | |
| MFR "L" | | g/10min | 25.2 | 20.1 | 22.4 | 20 | 17.7 | 22-6 | 19.5 | 25.2 | 24.5 |
| Flexural Modulus | | MPa | 1160 | 840 | 910 | 820 | 770 | 900 | 727 | 1100 | 1030 |
| Izod 23°C | | kJ/m² | 5 | 24.1 | 18.8 | 22 | 31.3 | 21.8 | 25.7 | 8-9 | 11.1 |
| Izod 0°C | | kJ/m² | 3.4 | 4.9 | 4.3 | 4.5 | 6.3 | 5.6 | 6.4 | 3.8 | 4 |
| Izod -20°C | | kJ/m² | 2.7 | 2.3 | 2.9 | 2.4 | 3.3 | 3.9 | 4 | 3.1 | 3.4 |
| Tensile strength at yield | | MPa | 24.4 | 19.9 | 21.2 | 19.2 | 19-5 | 21.5 | 19.4 | 24 | 24.3 |
| Elongation (strain) at yield | | % | 12.6 | 16.2 | 13.3 | 17.4 | 17.5 | 15.7 | 17.7 | 12.7 | 12.4 |
| Tensile strength at break | | MPa | 17.1 | 17 | 16.3 | 16 | 17.3 | 16.1 | 18.3 | 15.6 | 15-4 |
| Elongation at break | | % | 47 | 625 | 760 | 585 | 580 | 660 | 600 | 84 | 116 |
| D/B | | °c | -36 | | -39 | - | - | -39 | - | -42 | -46 |
| HAZE | | % | 28 | 33.1 | 26 | 28.3 | 24.7 | 23.2 | 27.5 | 30.4 | 37.4 |
| GLOSS °60 | | % | 111 | 112.3 | 108.7 | 108.5 | 110.3 | 112.2 | 115.2 | 104.4 | 101.6 |
| Whitching resistance: diameter (cm) of the whitening area due to a ram falling from a height of | 76 cm | mmx10 | 120 | 0 | 100 | 0 | 0 | 80 | 0 | 100 | 70 |
| | 30cm | mmx10 | 80 | 0 | 70 | 0 | 0 | 60 | 0 | 90 | 50 |
| | 20 cm | mmx10 | 70 | 0 | 50 | 0 | 0 | 60 | 0 | 70 | 40 |
| | 10 cm | mmx10 | 50 | 0 | 30 | 0 | 0 | 40 | 0 | 60 | 30 |
| | 5 cm | mmx 10 | 20 | 0 | 0 | 0 | 0 | 20 | 0 | 30 | 20 |

**Table3 - Blends**

| **examples** | | | **Ref. 1**** | **6*** | **7c** | **Ref.2** | **8c** | **9c** |
|---|---|---|---|---|---|---|---|---|
| %wt component (a) | HEGO1 | | 100 | 90 | 90 | | | |
| | HECO2 | | | | | 100 | 90 | 90 |
| %wt component (b) | | | 0 | 10 | 10 | 0 | 10 | 10 |
| Component (b) | | | | PB2 | PBc | | PB2 | PBc |
| MFR "L" | | g/10min | 21.8 | 18.9 | 19.3 | 16 | 13 | 14.4 |
| Flexural Modulus | | MPa | 1136 | 815 | 945 | 985 | 717 | 848 |
| Izod 23 °C | | kJ/m² | 5.1 | 24 | 15.5 | 16.7 | 55.1 | 44.5 |
| Izod 0 °C | | kJ/m² | 3.3 | 3.8 | 3.6 | 10.8 | 13.0 | 10.4 |
| Izod -20 °C | | kJ/m² | 2.3 | 2 | 2.4 | 8.9 | 8.1 | 8.1 |
| Tensile str. at yield | | MPa | 23.9 | 19.7 | 21 | 17.6 | 15.7 | 16.8 |
| Elongation (strain) at yield | | % | 13.2 | 14.6 | 14 | 4.4 | 8.0 | 5.7 |
| Tensile str. at break | | MPa | 16.2 | 16.9 | 18.2 | 13.5 | 12.5 | 13.2 |
| D/B | | °c | -36 | - | - | <-50 | <-50 | <-50 |
| HAZE | | % | 29.3 | 28.4 | 57.3 | >100 | >90 | 101 |
| GLOSS °60 | | % | 103.9 | 105 | 90.7 | 45 | 47 | 62.3 |
| Whitening resistance: diameter (cm) of the whitening area due to a ram falling from a height of | 76 cm | mm 10 | 120 | 0 | 120 | 180 | 190 | 190 |
| | 30 cm | mmx 10 | 90 | 0 | 70 | 130 | 140 | 140 |
| | 20 cm | mmx10 | 80 | 0 | 60 | 110 | 120 | 120 |
| | 10 cm | mmx 10 | 60 | 0 | 30 | 100 | 90 | 100 |
| | 4 cm | mmx10 | 10 | 0 | 20 | 70 | 60 | 70 |

| | | | | | | | | |
|---|---|---|---|---|---|---|---|---|
| *replica of example 2, 10 wt% of component (b) PB2 in blend with HECO1 ** replica of ref.1 base component (a) HECO1 neat | | | | | | | | |

## Claims

1. A polyolefin composition comprising, in percentage by weight based on the weight sum of the components (a1), (a2) and (b):
a1) 16-78 % of a propylene homopolymer or copolymer containing at most 15% of ethylene and/or C₄-C₁₀ α-olefin(s), having an isotactic index over 80%;
a2) 6-44% of a copolymer of ethylene with one or more C₄-C₁₀ α-olefin(s) containing from 10 to 40% by weight of said C₄-C₁₀ α-olefin(s); and
b) 3-70% of a butene-1 (co)polymer having:
- a content of butene-1 derived units of 80% wt or more,
- flexural modulus (MEF) of 60 MPa or less.

2. Polyolefin composition according to claim 1 wherein component (b) is chosen from the group consisting of:
(b1) a butene-1 copolymer having:
- content of butene-1 units in the form of isotactic pentads (mmmm%) from 25 to 55%,
- intrinsic viscosity [η] measured in tetraline at 135°C from 1 to 3 dL/g,
- content of xylene insoluble fraction at 0°C from 3 to 60%;
(b2) a butene-1/ethylene copolymer or a composition of butene-1/ethylene copolymers having a content of butene-1 units in form of isotactic pentads (mmmm%) equal to or higher than 96%, and a total content of ethylene units in the range of 10-25% mol; and
(b3) a butene-1/ethylene copolymer or a butene-1/ethylene/propylene terpolymer having the following properties:
- distribution of molecular weights (Mw/Mn) measured by GPC lower than 3;
- no melting point (TmII) detectable at the DSC.

3. The composition according to claim 1 having flexural modulus of at least 650 MPa.

4. Formed articles comprising the composition according to anyone of claim 1 to 3.

5. Films comprising the composition according to anyone of claim 1 to 3.

## Patentansprüche

1. Polyolefinzusammensetzung, die in Gewichtsprozent bezogen auf die Gewichtssumme der Komponenten (a1), (a2) und (b) Folgendes umfasst:
a1) 16-78% eines Propylenhomopolymers oder -copolymers, das höchstens 15% Ethylen und/oder C₄-C₁₀-α-Olefin(e) enthält, mit einem Isotaxieindex über 80%;
a2) 6-44% eines Copolymers von Ethylen mit einem oder mehreren C₄-C₁₀-α-Olefin(en), das von 10 bis 40 Gew.-% der C₄-C₁₀-α-Olefin(e) enthält; und
b) 3-70% eines Buten-1-(co)polymers mit:
- einem Gehalt an von Buten-1 abgeleiteten Einheiten von 80 Gew.-% oder mehr,
- einem Biegemodul (MEF) von 60 MPa oder weniger.

2. Polyolefinzusammensetzung nach Anspruch 1, wobei Komponente (b) aus der Gruppe ausgewählt ist, die Folgendes umfasst:
(b1) ein Buten-1-Copolymer mit:
- einem Gehalt an Buten-1-Einheiten in Form von isotaktischen Pentaden (mmmm%) von 25 bis 55%,
- einer Grenzviskosität [η], gemessen in Tetralin bei 135°C, von 1 bis 3 dL/g,
- einem Gehalt an einer bei 0°C in Xylol unlöslichen Fraktion von 3 bis 60%;
(b2) ein Buten-1/Ethylen-Copolymer oder eine Zusammensetzung von Buten-1/EthylenCopolymeren mit einem Gehalt an Buten-1-Einheiten in Form von isotaktischen Pentaden (mmmm%) gleich oder größer als 96% und einem Gesamtgehalt an Ethyleneinheiten im Bereich von 10-25 mol-%; und
(b3) ein Buten-1/Ethylen-Copolymer oder ein Buten-1/Ethylen/Propylen-Terpolymer mit den folgenden Eigenschaften:
- eine mittels GPC gemessene Molekulargewichtsverteilung (Mw/Mn) kleiner als 3;
- keinen bei der DSC nachweisbaren Schmelzpunkt (TmII).

3. Zusammensetzung nach Anspruch 1 mit einem Biegemodul von mindestens 650 MPa.

4. Geformte Gegenstände aus der Zusammensetzung nach einem der Ansprüche 1 bis 3.

5. Folien aus der Zusammensetzung nach einem der Ansprüche 1 bis 3.

## Revendications

1. Composition polyoléfinique comprenant, en pourcentage en poids sur base de la somme des poids des composants (a1), (a2) et (b) :
a1)16-78% d'un homopolymère ou d'un copolymère de propylène contenant au plus 15% d'éthylène et/ou de C₄-C₁₀-a-oléfine(s), présentant un indice isotactique supérieur à 80% ;
a2)6-44% d'un copolymère d'éthylène et d'une ou plusieurs C₄-C₁₀-α-oléfine(s) contenant 10 à 40% en poids desdites C₄-C₁₀-α-oléfine(s) ; et
b) 3-70% d'un (co)polymère de butène-1 présentant :
- une teneur en unités dérivées du butène-1 de 80% en poids ou plus,
- un module de flexion (MEF) de 60 MPa ou moins.

2. Composition polyoléfinique selon la revendication 1, le composant (b) étant choisi dans le groupe constitué par :
(b1)un copolymère de butène-1 présentant :
- une teneur en unités de butène-1 sous forme de pentades isotactiques (mmmm%) de 25 à 55%,
- une viscosité intrinsèque [η] mesurée dans la tétraline à 135°C de 1 à 3 dl/g,
- une teneur en fraction insoluble dans le xylène à 0°C de 3 à 60% ;
(b2) un copolymère de butène-1/éthylène ou une composition de copolymères de butène-1/éthylène présentant une teneur en unités de butène-1 sous forme de pentades isotactiques (mmmm%) égale ou supérieure à 96%, et une teneur totale en unités d'éthylène dans la plage de 10-25% en mole ; et
(b3) un copolymère de butène-1/éthylène ou un terpolymère de butène-1/éthylène/propylène présentant les propriétés suivantes :
- une distribution des poids moléculaires (Mw/Mn), mesurée par CPG, inférieure à 3 ;
- pas de point de fusion (Tmll) détectable par DSC (calorimétrie différentielle par balayage).

3. Composition selon la revendication 1, présentant un module de flexion d'au moins 650 MPa.

4. Objets façonnés comprenant la composition selon l'une quelconque des revendications 1 à 3.

5. Films comprenant la composition selon l'une quelconque des revendications 1 à 3.
